# EUROPEAN PATENT APPLICATION

(11) **EP 1 677 079 A1**
(43) Date of publication of application: **05.07.2006**
(21) Application number: 04293172.5
(22) Date of filing: 30.12.2004
(51) Int. Cl.: G01D 5/14, G01D 5/16

(54) **Magnetic sensor**

(71) Applicant: Taigene Metal Industry Co., Ltd., Taipei, Republic of China (TW)
(72) Inventor: Ching-Shun, Ko, Yungho City Taipei (TW); Yao-Song, Yang, Toufen Township Miaoli County (TW)
(74) Representative: Geismar, Thierry

(57) **Abstract**

The present invention discloses a magnetic sensor (100), comprising a circular base (102), the center of said base having a circular hole (104), the lower surface of said circular base being provided with a flange (103); and a plurality of ring-shaped permanent magnets (101) of varying sizes, said ring-shaped permanent magnets (101) having a plurality of magnetic poles, and said plurality of ring-shaped permanent magnets (101) adhering individually to said circular base (102) and having the center of said circular base (102) as their center, with sensing action being achieved through use of the plurality of magnetic poles of said plurality of ring-shaped permanent magnets (101).

## Description

The present invention pertains to a magnetic sensor. In particular, it concerns a magnetic sensor to be used in electronic power steering (EPS) systems in automobiles.

With the rapid development of science and technology, many sensors, such as image sensors, temperature sensors, and magnetic sensors, have been widely applied in a variety of fields such as telecommunications and the automobile industry. In many applications, images captured by an image sensor are not simply output for observation. On the contrary, image sensor information can be used for other purposes, such as for detecting the motion of an optical mouse or detecting the motion of an object. For example, the image sensors in the visual unit of a toy or machine generally are used to detect motion. In the imaging field, image sensors are also often used to distinguish shapes or objects.

In addition, there have been major developments in the materials used to form the aforesaid magnetic sensors. Some of these magnetic sensors can be used in automobiles having electronic power steering (EPS) systems. In other words, magnetic sensors can be used to control the direction and speed of an automobile's power steering wheel.

Conventional magnetic sensors are made directly of magnets and are then embedded in the motor axle. They are relatively dependent on environmental and climatic factors. Therefore, in view of the above drawbacks, the present invention presents a method for solving the above problems.

Therefore, the present invention is created in view of the aforementioned problems, and the object of the present invention is to provide a magnetic sensor that can equip an automobile having an electronic power steering (EPS) system. For example, it could be applied to an electronic power steering wheel or a brushless DC motor.

The object of the present invention is to disclose a magnetic sensor, comprising a base and a plurality of permanent magnets of varying sizes. Each of said permanent magnets has a plurality of magnetic poles, and said plurality of permanent magnets individually adhere to the aforesaid base. Sensing action is achieved through use of the plurality of magnetic poles of said plurality of ring-shaped permanent magnets.

The present invention discloses a magnetic sensor, comprising a circular base, the center of said base having a circular hole, the lower surface of said circular base being provided with a flange; and a plurality of ring-shaped permanent magnets of varying sizes, said ring-shaped permanent magnets having a plurality of magnetic poles, and said plurality of ring-shaped permanent magnets adhering individually to said circular base and having the center of said circular base as their center, with sensing action being achieved through use of the plurality of magnetic poles of said plurality of ring-shaped permanent magnets.

In the descriptions below, preferred embodiments of the present invention will be explained in greater detail in light of the following drawings:

Fig. 1 shows a lateral view of a magnetic sensor of the present invention.

Fig. 2 shows a top view of a magnetic sensor of the present invention.

The present invention is described as a magnetic sensor. This magnetic sensor comprises a circular base and a plurality of ring-shaped permanent magnets of varying sizes, wherein said circular base is a wheel that functions as a support and that is connected to the motor axle. Said ring-shaped permanent magnets are the main part of said magnetic sensor. Its function is, of course, by means of the number of magnetic poles of the permanent magnets, to achieve sensing action with Hall components. In the following description, a specific, detailed explanation is provided so that this embodiment might be fully understood. Nevertheless, one skilled in the art could execute the present invention without one or more specific, detailed explanations by perhaps employing different methods or different embodiment features.

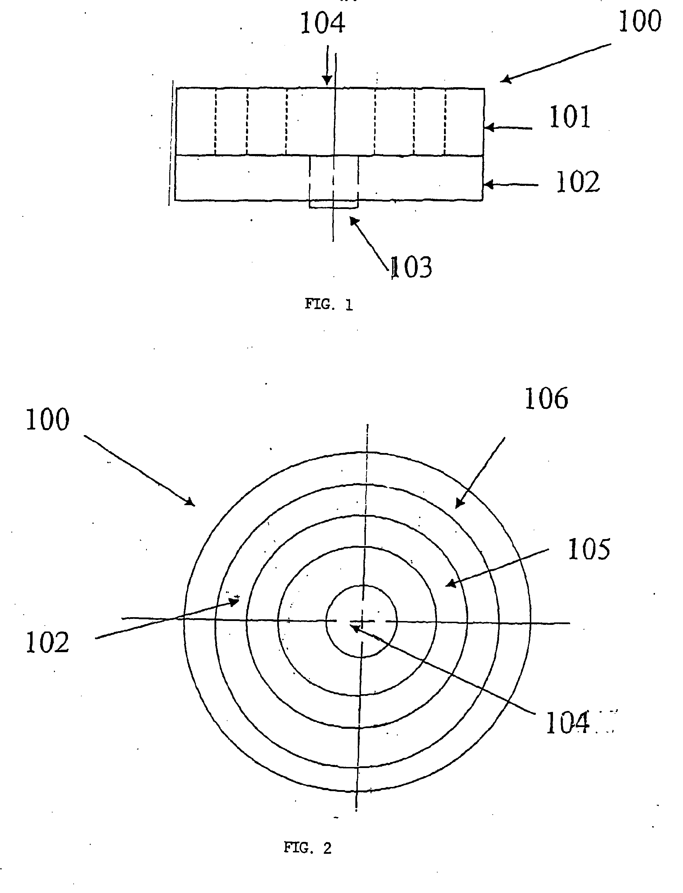

Reference is made to Fig. 1, which provides a lateral view of a magnetic sensor 100 of the present invention. Said magnetic sensor 100 comprises a circular base 102 and a plurality of ring-shaped permanent magnets 101 of varying sizes. There is a circular hole 104 at the center of said circular base 102, and the lower surface of the circular base 102 is provided with a flange 103. Each of the plurality of ring-shaped permanent magnets 101 of various sizes has a plurality of magnetic poles, such as 6 or 72 magnetic poles. In addition, said plurality of ring-shaped permanent magnets 101 adhere individually to said circular base 102 and have as their center the center of said circular base 102. Sensing action is achieved through use of the plurality of magnetic poles of said plurality of ring-shaped permanent magnets 101.

The circular base 102 in the present invention can be formed from a metal, plastic, or ceramic material. Metal that is of magnetically permeable material is especially preferred. In other words, the material for the circular base 102 of the present invention can be selected as is necessary.

In addition, the plurality of ring-shaped permanent magnets 101 in accordance with the present invention can be formed from materials listed in the following: aluminum nickel cobalt (AlNiCo), samarium cobalt (SmCo), neodymium iron boron (NdFeB), hard ferrite, Magnequench (MQ), samarium iron, nitrogen (SmFeN), or manganese aluminum carbon (MnAIC). Therefore, in one embodiment, permanent magnets could be selected that are made from any of the above materials to serve as the ring-shaped permanent magnets 101 of the present invention. Said ring-shaped permanent magnets 101 can be made by employing the methods of sintering, casting, or bonding.

Furthermore, in the above-described method of adhesion, said plurality of ring-shaped permanent magnets 101 can be adhered to said circular base 102 using a glue. In embodiment 1, said glue is an epoxy resin.

Reference is made to Fig. 2, which is a drawing of a magnetic sensor 100 of the present invention. Said magnet sensor 100 comprises a circular base 102 and two ring-shaped permanent magnets 105 and 106 of different sizes. There is a circular hole 104 at the center of said circular base 102, and the lower surface of the circular base 102 is provided with a flange 103 (as shown in Fig. 1). Said ring-shaped permanent magnets 105 and 106 have a plurality of magnetic poles, e.g. 6 or 72 magnetic poles. In addition, said ring-shaped permanent magnets 105 and 106 separately adhere to said circular base 102 and have the center of said circular base 102 as their center. Sensing action is achieved by using the plurality of magnetic poles of said ring-shaped permanent magnets 105 and 106.

Furthermore, in the above-described method of adhesion, said plurality of ring-shaped permanent magnets 105 and 106 can be adhered to said circular base 101 using a glue. In embodiment 1, said glue is an epoxy resin.

A method of manufacturing a magnetic sensor including a base 102 and permanent magnets comprises:
(a) creating the permanent magnets by at least one of: (i) sintering, (ii) casting and (iii) bonding;
(b) machining the base 102; and
(c) adhesively attaching the permanent magnets to the base 102.

The method may further comprise making the permanent magnets in ring-like shapes with substantially flat and co-planar surfaces opposite the base 102, and making the base 102 with a substantially circular periphery and a central hole 104.

The magnetic sensor 100 of the present invention can be used in automobiles that have an electronic power steering (EPS) system. For example, it can be used on a power steering wheel and a brushless DC motor. In other words, a magnetic sensor of the present invention can be used to control the speed of an automobile or the direction of a steering wheel. Since the aforementioned materials are widely used in manufacturing magnetic sensors, they are easily available for manufacturing magnetic sensors.

For example, an automotive vehicle system comprises an electronic power steering system; and multiple ring-shaped permanent magnets of varying sizes concentrically aligned with each other through adhesive bonding. The permanent magnets operably sense the position of the power steering system through a plurality of magnetic poles of the permanent magnets. The permanent magnets may have at least six magnetic poles, and annular and flat surfaces of the permanent magnets may be co-planar.

The system may further comprise a non-conductive base attached to the permanent magnets. An epoxy resin attaches the permanent magnets directly to the base, the base being at least one of plastic and ceramic.

In another embodiment, the system comprises a base 102 attached to the permanent magnets. The base 102 and permanent magnets have central holes 104, and a flange 103 projecting from a surface of the base 102 opposite from the permanent magnets.

Advantages of the present invention are: 1. The circular base can undergo precision-machining. If the circular base materials are ferrous magnetic materials, they can boost magnetic permeability effects. 2. The form of adhesion can, on the one hand, reduce consumption of magnet material, while on the other hand, achieving greater dependability, especially with respect to environmental and climatic factors.

Though a preferred embodiment is used to explain the present invention to one familiar with the art, the intent is not to impose limits on the present invention. Modified and similar arrangements that remain within the spirit and scope of the present invention should be included under the claims as described below. Such a scope should be consistent with the broadest interpretation covering all modified and similar structures. Therefore, the explanation of the above preferred embodiment of the present invention can be used to distinguish various modifications made within the spirit and scope of the present invention.

## Claims

1. A magnetic sensor (100), comprising:
a base (102), and
a plurality of permanent magnets (101, 105, 106) of varying sizes, each of said permanent magnets (101, 105, 106) having a plurality of magnetic poles, said plurality of permanent magnets (101, 105, 106) individually adhering to said base (102), with sensing action being achieved by the plurality of magnetic poles of said plurality of permanent magnets (101, 105, 106).

2. The magnetic sensor of claim 1, wherein said base (102) is a wheel having a circular hole (104) and a flange (103).

3. The magnetic sensor of claim 2, wherein the material of said wheel is a metal.

4. The magnetic sensor of claim 2, wherein the material of said wheel is a plastic.

5. The magnetic sensor of claim 2, wherein the material of said wheel is a ceramic.

6. The magnetic sensor of claim 1, wherein said plurality of permanent magnets (101, 105, 106) is a plurality of ring-shaped permanent magnets (101, 105, 106) of varying sizes.

7. The magnetic sensor of claim 1, wherein said permanent magnets (101, 105, 106) are formed by a sintering method.

8. The magnetic sensor of claim 1, wherein said permanent magnets (101, 105, 106) are formed by a casting method.

9. The magnetic sensor of claim 1, wherein said permanent magnets (101, 105, 106) are formed by a bonding method.

10. The magnetic sensor of claim 1, wherein the material of said permanent magnets (101, 105, 106) is predominately aluminum nickel cobalt (AlNiCo).

11. The magnetic sensor of claim 1, wherein the material of said permanent magnets (101, 105, 106) is predominately samarium cobalt (SmCo).

12. The magnetic sensor of claim 1, wherein the material of said permanent magnets (101, 105, 106) is predominately neodymium iron boron (NdFeB).

13. The magnetic sensor of claim 1, wherein the material of said permanent magnets (101, 105, 106) is predominately hard ferrite.

14. The magnetic sensor of claim 1, wherein the material of said permanent magnets (101, 105, 106) is predominately Magnequench (MQ).

15. The magnetic sensor of claim 1, wherein the material of said permanent magnets (101, 105, 106) is predominately samarium iron nitrogen (SmFeN).

16. The magnetic sensor of claim 1, wherein glue bonds said permanent magnets (101, 105, 106) to said base (102).

17. The magnetic sensor of claim 16, wherein said glue is an epoxy resin.

18. A magnetic sensor (100), comprising:
a circular base (102), the center of said circular base (102) having a circular hole (104), and the bottom surface of said circular base (102) having a flange (103); and
a plurality of ring-shaped permanent magnets (101, 105, 106) of varying sizes, each of said ring-shaped permanent magnets (101, 105, 106) having a plurality of magnetic poles, said plurality of ring-shaped permanent magnets (101, 105, 106) individually adhering to said circular base (102) and having as their center the center of said circular base (102).

19. The magnetic sensor of claim 18, wherein the material of said circular base (102) is metal.

20. The magnetic sensor of claim 18, wherein the material of said circular base (102) is plastic.

21. The magnetic sensor of claim 18, wherein the material of said circular base (102) is ceramic.

22. The magnetic sensor of claim 18, wherein said ring-shaped permanent magnets (101, 105, 106) are formed by a sintering method.

23. The magnetic sensor of claim 18, wherein said ring-shaped permanent magnets (101, 105, 106) are formed by a casting method.

24. The magnetic sensor of claim 18, wherein said ring-shaped permanent magnets (101, 105, 106) are formed by a bonding method.

25. The magnetic sensor of claim 18, wherein the material of said ring-shaped permanent magnets (101, 105, 106) is essentially aluminum nickel cobalt (AlNiCo).

26. The magnetic sensor of claim 18, wherein the material of said ring-shaped permanent magnets (101, 105, 106) is essentially samarium cobalt (SmCo).

27. The magnetic sensor of claim 18, wherein the material of said ring-shaped permanent magnets (101, 105, 106) is essentially neodymium iron boron (NdFeB).

28. The magnetic sensor of claim 18, wherein the material of said ring-shaped permanent magnets (101, 105, 106) is essentially hard ferrite.

29. The magnetic sensor of claim 18, wherein the material of said ring-shaped permanent magnets (101, 105, 106) is essentially Magnequench (MQ).

30. The magnetic sensor of claim 18, wherein the material of said ring-shaped permanent magnets (101, 105, 106) is essentially samarium iron nitrogen (SmFeN).

31. The magnetic sensor of claim 18, wherein the material of said ring-shaped permanent magnets (101, 105, 106) is essentially manganese aluminum cobalt (MnAIC).

32. The magnetic sensor of claim 18, wherein glue bonds said permanent magnets (101, 105, 106) to said circular base (102).

33. The magnetic sensor of claim 32, wherein said glue is an epoxy resin.

34. An automotive vehicle system comprising:
an electronic power steering system; and
multiple ring-shaped permanent magnets (101, 105, 106) of varying sizes concentrically aligned with each other through adhesive bonding;
the permanent magnets (101, 105, 106) operably sensing the position of the power steering system through a plurality of magnetic poles of the permanent magnets (101, 105, 106).

35. The system of Claim 34 further comprising a non-conductive base attached to the permanent magnets.

36. The system of Claim 35 further comprising an epoxy resin attaching the permanent magnets (101, 105, 106) directly to the base (102), the base being at least one of plastic and ceramic.

37. The system of Claim 34 further comprising a base (102) attached to the permanent magnets (101, 105, 106), the base (102) and permanent magnets (101, 105, 106) having central holes (104), and a flange (103) projecting from a surface of the base (102) opposite from the permanent magnets (101, 105, 106).

38. The system of Claim 34 wherein the permanent magnets (101, 105, 106) have at least six magnetic poles, and annular and flat surfaces of the permanent magnets (101, 105, 106) are co-planar.

39. A method of manufacturing a magnetic sensor including a base (102) and permanent magnets (101, 105, 106), the method comprising:
(a) creating the permanent magnets (101, 105, 106) by at least one of: (i) sintering, (ii) casting and (iii) bonding;
(b) machining the base (102); and
(c) adhesively attaching the permanent magnets (101, 105, 106) to the
base (102).

40. The method of Claim 39 further comprising making the permanent magnets (101, 105, 106) in ring-like shapes with substantially flat and co-planar surfaces opposite the base (102), and making the base (102) with a substantially circular periphery and a central hole (104).
